# EUROPEAN PATENT APPLICATION

(11) **EP 3 185 478 A1**
(43) Date of publication of application: **28.06.2017**
(21) Application number: 14881873.5
(22) Date of filing: 08.12.2014
(51) Int. Cl.: H04L 12/26, H04L 29/06, H04W 24/00

(54) **AUTOMATIC PACKET CAPTURE METHOD AND APPARATUS**

(30) Priority: 19.08.2014 CN 201410409011
(71) Applicant: ZTE Corporation, Shenzhen, Guangdong 518057 (CN)
(72) Inventor: ZENG, Shenggen, Shenzhen Guangdong 518057 (CN); CHEN, Lijuan, Shenzhen Guangdong 518057 (CN)
(74) Representative: Awapatent AB
(86) International application number: PCT/CN2014/093287
(87) International publication number: WO 2015/117486

(57) **Abstract**

A method and apparatus for automatically collecting data are provided. The method includes that: a media gateway MGW determines a media resource including an MGW internal media stream, on which data collecting needs to be conducted, and data collecting point information corresponding to the media resource based on identification information sent by a media gateway controller MGC; and the MGW conducts data collecting on the media resource according to the data collecting point information. With the method and apparatus for automatically collecting data of the technical scheme of the present invention, by automatically collecting all media resources of a whole call process, it is conducive to media fault analysis during an initial call stage; and a media resource in abnormity can be precisely positioned by conducting data collecting on the media resources on the MGW.

## Description

### Technical Field

The present invention relates to the technical field of automatic data collecting, and in particular, to a method and apparatus for automatically collecting data.

### Background

In the 3G network, an IP Multimedia Subsystem IMS, and a Next Generation Network NGN system, control and bearer of a Core Network CN device are separated. Services are implemented on a Media Gateway Controller MGC, and the bearer is established on a Media Gateway MGW to be implemented. The MGW is controlled by the MGC and implements functions of media access call and network intercommunication.

In the commercial-use process of the MGW device, it is often required to conduct media interface data collecting aiming at voice channels of specified users on the MGW for a necessity of fault analysis and research and so on.

For a call of a relay bearer, since both the MGC and the MGW have information of relay circuit resources, when the MGC initiates a call, specified relay circuit resource may be occupied, and the MGW conducts data collecting on the specified relay circuit resource.

For a call of an IP bearer on the MGW, since media resources are maintained and used on the MGW, the MGC cannot know information about media resources used by the MGW, and only after a call is established, address information including an IP address and a port number of the call can be known through an H.248 message between the MGC and the MGW. For the media interface data collecting of the IP bearer, there are main two ways in the related art as follows.
1. On the MGW, for example, a spilt path is explored through a transmission apparatus, on an optical fiber or a network cable, and the spilt media streams are connected to a data collecting apparatus and filtered according to conditions such as an address, a port number and a codec type, to acquire media streams consistent with the conditions.
2. After the call is established, the data collecting conditions, such as the IP address, the port number and the codec type, are sent to the MGW, and the MGW sends media information consistent with the conditions to an appointed or specified location.

In the above related art, there are main technical problems as follows. The data collecting on the call during a whole call process is lacked. Moreover, the collected media information data is media data transmitted by the MGW and other network elements, and media data information of MGW internal resources is not collected, thus a specific reason for the media fault cannot be precisely positioned.

### Summary

The technical problem to be solved in the present invention is to provide a method and apparatus for automatically collecting data, to solve the problem that media data information of MGW internal resources is not collected in the related art.

To solve the above technical problem, the following technical scheme is adopted.

A method for automatically collecting data includes the following steps.

A media gateway MGW determines a media resource including an MGW internal media stream, on which data collecting needs to be conducted, and data collecting point information corresponding to the media resource based on identification information sent by a media gateway controller MGC.

The MGW conducts data collecting on the media resource according to the data collecting point information.

In an exemplary embodiment, the identification information includes: an International Mobile Subscriber Identification Number IMSI, a Mobile Station integrated service digital network ISDN number MSISDN or an International Mobile Equipment Identity IMEI.

In an exemplary embodiment, the step that an MGW determines a media resource including an MGW internal media stream, on which data collecting needs to be conducted, and data collecting point information corresponding to the media resource based on identification information sent by an MGC includes that:
the MGW performs a parsing based on the identification information sent by the MGC to obtain a parsing result;
the MGW matches the parsing result with local data collecting identification information in the MGW to determine matched identification information matched with the local data collecting identification information in the MGW; and
the MGW determines the media resource on which data collecting needs to be conducted and the data collecting point information corresponding to the media resource on which data collecting needs to be conducted according to a media resource used by a context containing the matched identification information.

In an exemplary embodiment, the step that the MGW conducts data collecting on the media resource according to the data collecting point information includes:
the MGW conducts data collecting on the media resource according to media resource location information contained in the data collecting point information.

In an exemplary embodiment, the method further includes:
after conducting data collecting on the media resource according to the data collecting point information, the MGW stores collected media resource data.

An apparatus for automatically collecting data includes a positioning module and a data collecting module.

The positioning module is arranged to determine a media resource including an MGW internal media stream, on which data collecting needs to be conducted, and data collecting point information corresponding to the media resource based on identification information sent by an MGC.

The data collecting module is arranged to conduct data collecting on the media resource according to the data collecting point information.

In an exemplary embodiment, the apparatus further includes a receiving module.

The receiving module is arranged to receive the identification information sent by the MGC.

In an exemplary embodiment, the apparatus further includes a parsing module.

The parsing module is arranged to perform a parsing based on the identification information sent by the MGC to obtain a parsing result.

In an exemplary embodiment, the positioning module is arranged to determine a media resource including an MGW internal media stream, on which data collecting needs to be conducted, and data collecting point information corresponding to the media resource based on identification information sent by an MGC by means of:
matching the parsing result with local data collecting identification information in an MGW to determine matched identification information matched with the local data collecting identification information in the MGW; and
determining the media resource on which data collecting needs to be conducted and the data collecting point information corresponding to the media resource on which data collecting needs to be conducted according to a media resource used by a context containing the matched identification information.

In an exemplary embodiment, the apparatus further includes a storage module.

The storage module is arranged to, after conducting data collecting on the media resource according to the data collecting point information, store collected media resource data.

In an exemplary embodiment, the identification information includes: an International Mobile Subscriber Identification Number IMSI, a Mobile Station ISDN number MSISDN or an International Mobile Equipment Identity IMEI.

A computer program, including a program instruction is provided. Herein, when the program instruction is executed by a computer, the computer can execute any method for automatically collecting data mentioned above.

A carrier carrying the computer program is provided.

By using the above technical scheme, the embodiments of the present invention at least have the following advantages.

With the method and apparatus for automatically collecting data of the embodiments of the present invention, by automatically collecting all media resources of a whole call process, it is conducive to media fault analysis during an initial call stage. In addition, a media resource in abnormity can be precisely positioned by conducting data collecting on the media resources on the MGW.

### Brief Description of Drawings

FIG. 1 is a flow chart of a method for automatically collecting data according to the first embodiment of the present invention.
FIG. 2 is a schematic diagram of data collecting points of a media resource in the first embodiment of the present invention.
FIG. 3 is a schematic diagram of data collecting point configuration of a transcoded call in the first embodiment of the present invention.
FIG. 4 is a schematic diagram of data collecting point configuration during terminal migration in the first embodiment of the present invention.
FIG. 5 is a schematic diagram of a structure of an apparatus for automatically collecting data in the second embodiment of the present invention.
FIG. 6 is a schematic diagram of a structure of a system for automatically collecting data according to an application embodiment of the present invention.
FIG. 7 is a schematic diagram of data collecting point configuration when a relay circuit terminal plays a tone in another embodiment of the present invention.
FIG. 8 is a schematic diagram of data collecting point configuration when a relay circuit terminal receives numbers in another embodiment of the present invention.

### Detailed Description

The present invention will be described in detail in combination with the accompanying drawings and alternative embodiments below.

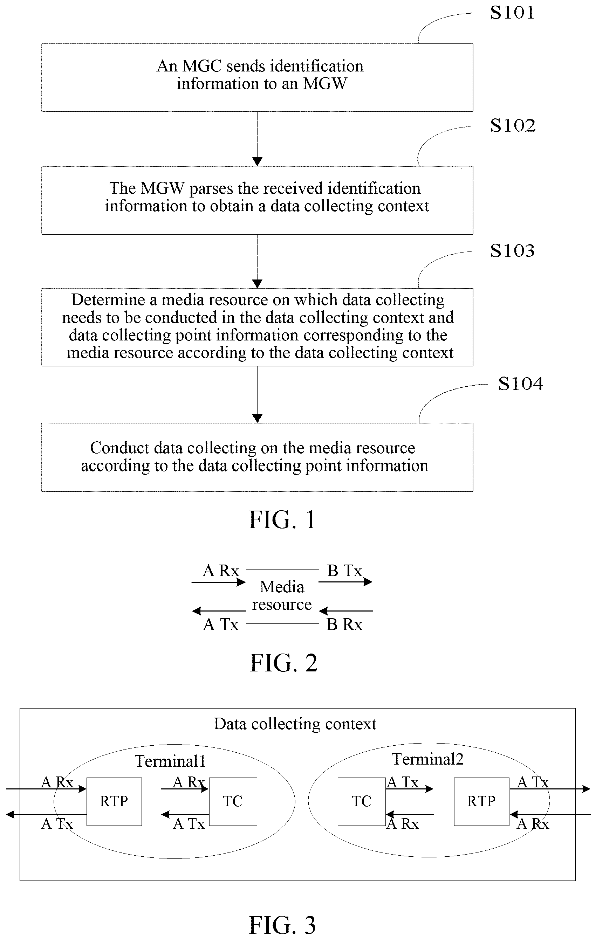

In the first embodiment of the present invention, a method for automatically collecting data includes the following specific steps as shown in FIG. 1.

In step S101, an MGC sends identification information to an MGW.

In an exemplary embodiment, before sending the identification information to the MGW, the MGC needs to learn about identification information of the user. Herein, the identification information may include but is not limited to the following information: an international mobile subscriber identification number, a mobile station ISDN number or an international mobile equipment identity. The MGW receives a data collecting request instruction containing number information and records information of the data collecting request.

In step S102, the MGW parses the received identification information to obtain a data collecting context.

In an exemplary embodiment, the MGC sends the identification information to the MGW. When the user initiates a call, the MGC informs the MGW to establish a bearer for the call, and the MGC sends the identification information to the MGW in an H.248 message between the MGC and the MGW. In an exemplary embodiment, the identification information is sent to the MGW when the MGC adds a terminal.

The MGW positions the data collecting context. The MGW parses the data collecting identification information sent by the MGC and matches the data collecting identification information with data collecting identification information locally stored by the MGW. If the matching is successful, the context carrying the identification information is used as a call context in which data collecting is required, and the context is called the data collecting context.

In step S103, a media resource on which data collecting needs to be conducted in the data collecting context and data collecting point information corresponding to the media resource are determined according to the data collecting context.

In an exemplary embodiment, the media gateway MGW determines a media resource including an MGW internal media stream, on which data collecting needs to be conducted, and data collecting point information corresponding to the media resource based on identification information sent by the media gateway controller MGC.

In an exemplary embodiment, the media resource on which data collecting needs to be conducted in the data collecting context and corresponding data collecting points are analyzed. In a call establishment process, the MGW dynamically analyzes the media resource used by the data collecting context and judges whether the data collecting needs to be conducted on the media resource. If the data collecting needs to be conducted on the media resource, the MGW acquires data collecting point configuration information of corresponding media resource, and reports media resource information and data collecting point information. Meanwhile, the MGW is informed to conduct data collecting on the media resource based on the data collecting points.

In an exemplary embodiment, as shown in FIG. 2, a direction of the media resource towards the external of the MGW is called an A end and a direction of the media resource towards the internal of the MGW called a B end. Each end has two data collecting points: a receiving direction Rx and a transmitting direction Tx. Therefore, one media resource may have four data collecting points at most: A Rx, A Tx, B Tx and B Rx. As shown in FIG. 3, a schematic diagram of data collecting points of a call required to be transcoded on a common IP bearer is given. An RTP resource is arranged with two data collecting points, i.e., the receiving direction Rx and the transmitting direction Tx, of the A end, on which media data are transmitted by the MGW and other network elements.

In a call process, such as tone playing, number receiving, handover, call hold, call waiting and color ring playing and so on, when data collecting context resource is changed, the MGW dynamically analyzes the media resource used by the data collecting context. For a resource on which data collecting is being conducted, the data collecting is continued. For a media resource that is newly applied for, it is judged whether data collecting needs to be conducted on the media resource, and if it is required to acquire data collecting point configuration information of the corresponding media resource, media resource information and data collecting point information are reported, and the MGW in which the media resources are located is informed to conduct data collecting based on the data collecting points in the meantime. For a media resource required to be released, if data collecting is being conducted on the media resource, it is required to inform the MGW to stop the data collecting; and if a new context is introduced in the call process, the new context is also configured as a data collecting context, and the data collecting is also conducted on the resource of the context.

When the call is initiated, it is required to play a ring-back tone to a calling user, and required to apply for a tone resource for tone playing, and data collecting is required to be conducted on the newly added tone resource at this point. After a called party answers, the tone playing is stopped, and voice channels of the calling party and the called party are connected, and at the moment it is required to release the tone resource and stop the data collecting on the tone resource.

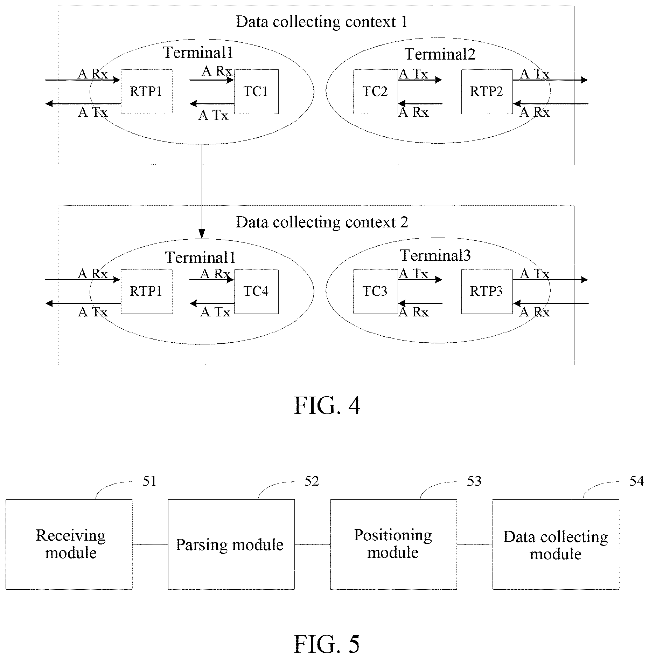

As shown in FIG. 4, in the call process, when a terminal of a data collecting context 1 is migrated to other context, the context to which the terminal is migrated is also associated with a collected call, thus the context is also required to consider the data collecting, and the context is a data collecting context 2. For the data collecting context 1, data collecting points of the terminal migrated out are canceled, that is, RTP1 and TC1 are informed to stop the data collecting; media resources of other terminals on the data collecting context 1 are reanalyzed, and data collecting points continue to be kept for unchanged resources, such as RTP2; for the released resources, corresponding data collecting points are canceled, that is, TC2 is informed to stop the data collecting; if there are resources that are newly applied for, it is required to configure new data collecting points. For the data collecting context 2, a media resource used by the context is reanalyzed, and data collecting points are configured for the terminal migrated in, that is, the RTP1 and TC4 are informed to conduct the data collecting; and the data collecting is also conducted on media resources of other terminals in the context, that is, RTP3 and TC3 are informed to conduct the data collecting.

In step S104, data collecting is conducted on the media resource based on the data collecting point information.

In an exemplary embodiment, after a data collecting command is received, the MGW conducts data collecting on the media resource according to data collecting point positions corresponding to the media resource. And data of the media resource collected at various data collecting points are stored to be used for follow-up fault location and analysis.

In the second embodiment of the present invention, an apparatus for automatically collecting data includes: a receiving module 51, a parsing module 52, a positioning module 53 and a data collecting module 54 as shown in FIG. 5. The receiving module 51 is arranged to receive identification information sent by an MGC.

In an exemplary embodiment, the MGC needs to learn about identification information of the user before sending the identification information to the MGW, and the receiving module 51 receives the identification information sent by the MGC. Herein, the identification information may include but is not limited to the following information: an international mobile subscriber identification number, a mobile station ISDN number or an international mobile equipment identity. The MGW receives a data collecting request instruction containing number information and records information of the data collecting request.

The parsing module 52 is arranged to parse the identification information to obtain a data collecting context.

In an exemplary embodiment, the parsing module 52 parses the identification information sent to the MGW by the MGC to obtain the data collecting context. When the user initiates a call, the MGC informs the MGW to establish a bearer for the call, and the MGC sends the identification information to the MGW in an H.248 message between the MGC and the MGW. In an exemplary embodiment, the identification information is sent to the MGW when the MGC adds a terminal. The parsing module 52 parses the data collecting identification information sent by the MGC and matches the data collecting identification information with identification information locally stored by the MGW. If the matching is successful, the context carrying the identification information is used as a call context in which data collecting is required, and the context is called the data collecting context.

The positioning module 53 is arranged to determine a media resource including an MGW internal media stream, on which data collecting needs to be conducted, and data collecting point information corresponding to the media resource based on the identification information sent by the MGC.

In an exemplary embodiment, the positioning module 53 analyzes the media resource on which data collecting needs to be conducted in the data collecting context and corresponding data collecting point information. In a call establishment process, the MGW dynamically analyzes the media resource used by the data collecting context, and judges whether the data collecting needs to be conducted on the media resource. If the data collecting needs to be conducted on the media resource, the MGW acquires data collecting point configuration information of corresponding media resource, and reports media resource information and data collecting point information. Meanwhile, the MGW is informed to conduct data collecting on the media resource based on the data collecting points.

The positioning module 53 is arranged to determine a media resource including an MGW internal media stream, on which data collecting needs to be conducted, and data collecting point information corresponding to the media resource based on the identification information sent by the MGC by means of:
matching the parsing result with local data collecting identification information in the MGW, and determining matched identification information matched with the local data collecting identification information in the MGW; and
determining the media resource on which data collecting needs to be conducted and the data collecting point information corresponding to the media resource on which data collecting needs to be conducted according to media resource used by the context containing the matched identification information.

The data collecting module 54 is arranged to conduct data collecting on the media resource according to the data collecting point information.

In an exemplary embodiment, after a data collecting command is received, the data collecting module 54 conducts data collecting on the media resource according to location information in the data collecting point information corresponding to the media resource.

Moreover, the apparatus for automatically collecting data in the second embodiment of the present invention may also include an identification information acquisition module and a storage module.

The identification information acquisition module is arranged to acquire identification information of a user.

The storage module is arranged to store the collected media resource data.

The embodiment of the present invention further discloses a computer program, including a program instruction. Herein, when the program instruction is executed by a computer, the computer can execute any method for automatically collecting data mentioned above.

The embodiment of the present invention further discloses a carrier carrying the computer program.

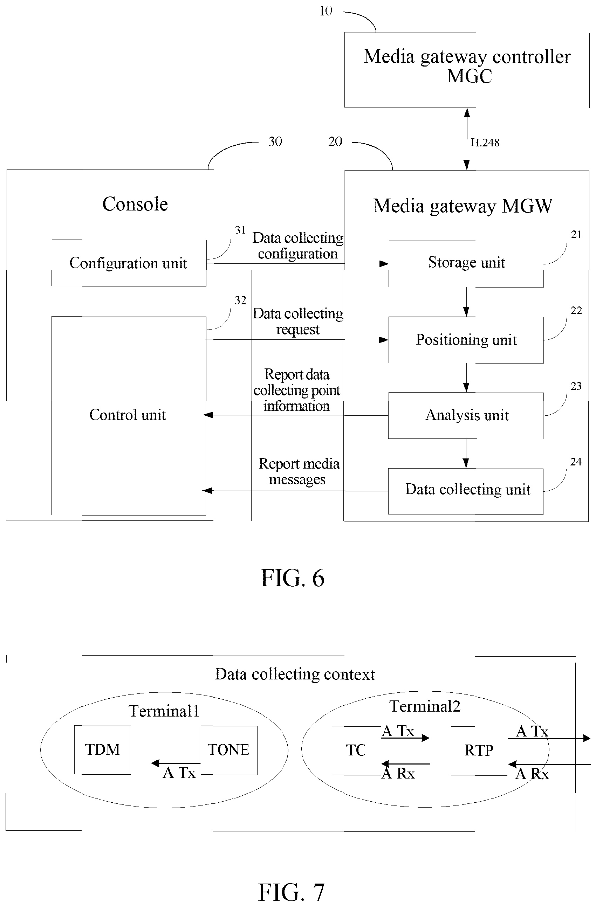

In an application embodiment of the present invention, a system for automatically collecting data includes a media gateway controller MGC10, a media gateway MGW20 and a console 30, as shown FIG. 6.

Herein, the media gateway MGW20 includes a storage unit 21, a positioning unit 22, an analysis unit 23 and a data collecting unit 24. The console 30 includes a configuration unit 31 and a control unit 32.

In an exemplary embodiment, the media gateway controller MGC10 sends identification information to the media gateway MGW20. In the embodiment, the media gateway controller MGC10 is called the MGC for short, the media gateway MGW20 is called the MGW for short. When a user initiates a call, the MGC informs the MGW to establish a bearer for the call, and the MGC sends the identification information to the MGW in an H.248 message between the MGC and the MGW. In general, the identification information is sent to the MGW when the MGC adds a terminal.

The media gateway controller MGC10 is arranged to send identification information of the call.

The storage unit 21 is arranged to store configuration information sent by the configuration unit of the console 30 for the positioning unit 22 to use.

The positioning unit 22 matches a call according to the identification information of the control unit 32 and positions a call on which data collecting is required.

The analysis unit 23 analyzes a media resource on which data collecting needs to be collected in a call process, reports the media resource and data collecting point information of the call, and informs the data collecting unit 24 to conduct data collecting.

The data collecting unit 24 receives an instruction of the analysis unit 23, conducts data collecting on the media resource, and reports media data to the control unit 32.

The configuration unit 31 configures data collecting point information and whether the data collecting needs to be conducted on the media resources such as IP bearer RTP resources, Transcode TC resources, tone TONE resources, number receiving (Dual Tone Multi Frequency, DTMF for short) resources and CONFerence (CONF for short) resources on the MGW.

The control unit 32 is arranged to initiate and stop the data collecting, receive a media resource and data collecting point information of the call, receive and store the collected media data.

In other embodiments, based on the above embodiments of the present invention, the data collecting may also be conducted on a media resource used a terminal based on a relay circuit in the embodiments of the present invention. Though the data collecting is not conducted on relay bearer resources in the embodiments of the present invention, the data collecting may also be conducted on other media resources used by the relay circuit terminal. The specific implementation flow is similar to the above embodiments and it will not be repeated here. The only difference is that the data collecting is not conducted on the relay circuit resource TDM.

FIG. 7 illustrates a schematic diagram of data collecting point configuration when a relay circuit terminal plays a tone. In the embodiment, a data collecting context has a relay circuit terminal 1 and a terminal 2 of IP bearer. In the embodiment of the present invention, the data collecting will not be conducted on the relay bearer resource TDM used by the terminal 1, but the data collecting will be conducted on the TONE resource of the tone playing. The terminal 2 is an IP bearer terminal, and the data collecting will be conducted on both RTP resources and TC resources used by the terminal 2.

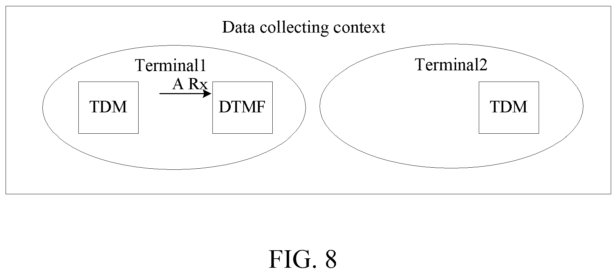

FIG. 8 illustrates a schematic diagram of data collecting point configuration when a relay circuit terminal receives numbers. In the embodiment, both two terminals of a data collecting context are relay circuit terminals, and the data collecting will not be conducted on all relay circuit resources TDM, but the data collecting will be conducted on DTMF resources used in the data collecting context.

In the a method and apparatus for automatically collecting data mentioned in the embodiments of the present invention, the time of collecting the media data is not limited, thus all media resource data of a whole call process may be automatically collected. By automatically collecting all the media resource data of the whole call process, it is conducive to media fault analysis during the initial call stage. Media resources in abnormity can be precisely positioned by conducting data collecting on the media resources on the MGW.

Through the descriptions of the specific embodiments, it should be able to have a thorough and concrete understanding on the technical means of the present invention, which are adopted to achieve the intended target and the effects thereof, but the appended diagrams are only used to provide references and descriptions, which are not used to limit the present invention.

### Industrial Applicability

With the method and apparatus for automatically collecting data of the embodiments of the present invention, by automatically collecting all media resources of the whole call process, it is conducive to media fault analysis during the initial call stage. In addition, media resources in abnormity can be precisely positioned by conducting data collecting on the media resources on the MGW. Therefore, the present invention has very strong industrial applicability.

## Claims

1. A method for automatically collecting data, comprising:
a media gateway, MGW, determining a media resource including an MGW internal media stream, on which data collecting needs to be conducted, and data collecting point information corresponding to the media resource based on identification information sent by a media gateway controller, MGC; and
the MGW conducting data collecting on the media resource according to the data collecting point information.

2. The method for automatically collecting data according to claim 1, wherein, the identification information includes: an international mobile subscriber identification number, IMSI, a mobile station integrated service digital network number, MSISDN, or an international mobile equipment identity, IMEI.

3. The method for automatically collecting data according to claim 1, wherein, the step of an MGW determining a media resource including an MGW internal media stream, on which data collecting needs to be conducted, and data collecting point information corresponding to the media resource based on identification information sent by an MGC includes:
the MGW performing a parsing based on the identification information sent by the MGC to obtain a parsing result;
the MGW matching the parsing result with local data collecting identification information in the MGW to determine matched identification information matched with the local data collecting identification information in the MGW; and
the MGW determining the media resource on which data collecting needs to be conducted and the data collecting point information corresponding to the media resources on which data collecting needs to be conducted according to a media resource used by a context containing the matched identification information.

4. The method for automatically collecting data according to any one of claims 1-3, wherein, the step of the MGW conducting data collecting on the media resource according to the data collecting point information includes:
the MGW conducting data collecting on the media resource according to media resource location information contained in the data collecting point information.

5. The method for automatically collecting data according to claim 1, further comprising:
after conducting data collecting on the media resource according to the data collecting point information, the MGW storing collected media resource data.

6. An apparatus for automatically collecting data, comprising a positioning module and a data collecting module, wherein:
the positioning module is arranged to determine a media resource including an MGW internal media stream, on which data collecting needs to be conducted, and data collecting point information corresponding to the media resource based on identification information sent by an MGC; and
the data collecting module is arranged to conduct data collecting on the media resource according to the data collecting point information.

7. The apparatus for automatically collecting data according to claim 6, further comprising a receiving module, wherein:
the receiving module is arranged to receive the identification information sent by the MGC.

8. The apparatus for automatically collecting data according to claim 6, further comprising:
a parsing module, arranged to perform a parsing based on the identification information sent by the MGC to obtain a parsing result.

9. The apparatus for automatically collecting data according to claim 8, wherein, the positioning module is arranged to determine a media resource including an MGW internal media stream, on which data collecting needs to be conducted, and data collecting point information corresponding to the media resource based on identification information sent by an MGC by means of:
matching the parsing result with local data collecting identification information in an MGW to determine matched identification information matched with the local data collecting identification information in the MGW; and
determining the media resource on which data collecting needs to be conducted and the data collecting point information corresponding to the media resource on which data collecting needs to be conducted according to a media resource used by a context containing the matched identification information.

10. The apparatus for automatically collecting data according to any one of claims 6-9, further comprising a storage module, wherein:
the storage module is arranged to, after conducting data collecting on the media resource according to the data collecting point information, store collected media resource data.

11. The apparatus for automatically collecting data according to claim 6, wherein, the identification information includes: an international mobile subscriber identification number, IMSI, a mobile station integrated service digital network number, MSISDN, or an international mobile equipment identity, IMEI.

12. A computer program, comprising a program instruction, wherein, when the program instruction is executed by a computer, the computer can execute the method for automatically collecting data according to any one of claims 1-5.

13. A carrier carrying the computer program according to claim 12.
